# EUROPÄISCHE PATENTANMELDUNG

(11) **EP 1 227 378 A2**
(43) Veröffentlichungstag der Anmeldung: **31.07.2002**
(21) Anmeldenummer: 02000535.1
(22) Anmeldetag: 09.01.2002
(51) Int. Cl.: G05B 19/042

(54) **Verfahren zum Betreiben eines Automatisierungssystem**

(30) Priorität: 16.01.2001 DE 10101746
(71) Anmelder: SIEMENS AKTIENGESELLSCHAFT, 80333 München (DE)
(72) Erfinder: Karl-Dietze, Ludwig, 90491 Nürnberg (DE); Sperl, Wolfgang, 93092 Barbing (DE)

(57) **Zusammenfassung**

Um einen möglichst einfachen und flexiblen Betrieb eines Verfahrens zum Betreiben eines Automatisierungssystems zu ermöglichen, ist ein Teil des Betriebsprogramms (B) als Skript-Programm (SP) ausgeführt, wobei das Zusammenwirken von im Automatisierungssystem implementierten Baugruppen (B1,B15) Regeln unterworfen ist, die im Rahmen dieses Skript-Programms (SP) hinterlegt werden. Durch die Ausgliederung der die Regeln betreffenden Programmbausteine aus einem ausführbaren Programm (AP,Firmware) in das Skript-Programm (SP) kann das Automatisierungssystem einfach und flexibel geändert werden.

## Beschreibung

Die Erfindung betrifft den Betrieb eines Automatisierungssystems, das zum Steuern oder Regeln von Komponenten eines Anlagenprozesses vorgesehen ist.

Typischerweise liest ein solches Automatisierungssystem von Sensoren oder Bedienelementen erfasste Werte ein und verarbeitet diese unter Zuhilfenahme von internen Regeln zu Ausgabewerte für Aktoren. Sensoren sind beispielsweise Temperaturfühler, Positionsmessgeräte, Druck- oder Drehzahlmesser usw. Aktoren sind typischerweise Antriebe aller Art. Ein modernes Automatisierungssystem besteht zu einem großen Teil aus Software, damit es vom Anwender an den spezifischen Einsatzzweck angepasst werden kann. Das Automatisierungssystem ist dadurch sehr flexibel und kann für unterschiedliche Anlagenprozesse - nach entsprechender Programmierung - eingesetzt werden.

Neben der Software umfasst das Automatisierungssystem Baugruppen als Hardware-Komponenten. Die Baugruppen sind für Teilaufgaben des Automatisierungssystems zuständig. Das Automatisierungssystem an sich ist modular aufgebaut und lässt sich individuell für den jeweiligen Einsatzzweck zusammenstellen und ggf. auch erweitern. Typischerweise ist auch die Software in Teilaufgaben untergliedert, die durch Software-Bausteine abgearbeitet werden.

Die Sensoren und Aktoren sind an die für sie vorgesehenen Baugruppen angeschlossen. Diese Baugruppen realisieren die Anschaltung der Sensoren und Aktoren an die Software, also an das auch als Firmware bezeichnete Betriebsprogramm des Automatisierungssystems. Hierzu steuert eine Baugruppe beispielsweise die Erfassung des Messwerts über den Sensor. Ein vom Sensor erfasster Messwert (z.B. Widerstandswert eines Temperaturfühlers) wird von der Baugruppe digitalisiert und an das Betriebsprogramm übermittelt. Dort wird der Wert in einem adressierbaren Speicherbereich abgelegt, so dass er aus diesem Speicherbereich gezielt abgerufen werden kann. Das Betriebsprogramm ist dabei als Maschinencode-Programm ausgestaltet. Die Firmware oder das Betriebsprogramm wird im Folgenden auch als ausführbares Maschinencode-Programm oder kurz als ausführbares Programm bezeichnet.

Über die Firmware wird der im Speicherbereich abgelegte Wert weiterverarbeitet und es wird beispielsweise in Abhängigkeit des Werts eine weitere Baugruppe angesteuert, über die dann ein Aktor aktiviert wird. Der Aktor ist beispielsweise ein Schaltrelais zum Einschalten einer Heizung.

Für einen reibungslosen Betrieb des Automatisierungssystems ist es notwendig, dass das ausführbare Programm über die im Automatisierungssystem vorhandenen Baugruppen informiert ist. Um das Automatisierungssystem durch eine neue Funktion oder Anwendung erweitern zu können, muss u.a. bekannt sein, welche im ausführbaren Programm vorgesehene Adressbereiche durch welche Baugruppen bereits belegt sind. Denn die neue Funktion wird in der Regel durch eine neue oder geänderte Baugruppe verwirklicht, der eine Adresse zugeordnet werden muss. Die neue Baugruppe wird zudem üblicherweise parametrisiert, beispielsweise wird ihr mitgeteilt, für welchen Temperaturbereich ein von ihr angesteuerter Sensor ausgelegt ist.

Beim erstmaligen Aufbau oder bei einer Änderung des Automatisierungssystems ist daher auch eine entsprechende Software-Konfiguration notwendig. In der Regel ist das Automatisierungssystems zur Konfiguration zweistufig aufgebaut. Und zwar umfasst es als erste Stufe ein programmtechnisches Konfigurationssystem, das so genannte Engineering-System. Die zweite Stufe ist ein Anwenderprogramm-System, das so genannte Runtime-System. Das Engineering-System ist üblicherweise auf einem Arbeitsplatzrechner installiert und wird von einem Programmierer oder Softwareentwickler bedient. Mit Hilfe des Engineering-Systems wird die eigentliche Konfiguration des Automatisierungssystems vorgenommen. D.h. es wird der für das Automatisierungssystem vorgesehenen hardwaretechnische (Baugruppen) und softwaretechnische Aufbau zusammengestellt und die für den konkreten Aufbau vorgesehenen Konfigurationsdaten ermittelt. Diese Konfigurations- oder Beschreibungsdaten umfassen beispielsweise Informationen über die verwendeten Baugruppen, über den für eine jeweilige Baugruppe vorgesehenen Steckplatz sowie über die einer jeweiligen Baugruppe zugeordneten Parametereinstellungen. Diese Beschreibungsdaten werden anschließend dem Anwenderprogramm-System übermittelt. Dieses ist dann quasi auf Knopfdruck in der Lage, einen industriellen Anlagenprozess zu steuern, ohne dass weitere Einstellungen vorgenommen werden müssen. Das Konfigurations-System und das Anwenderprogramm-System können aber auch in einem einheitlichen System zusammengefasst sein.

Üblicherweise ist für die Konfiguration im ausführbaren Programm zumindest des Konfigurations-Systems ein spezieller Programmbaustein vorgesehen, der sich mit der Hardwarekonfiguration befasst. Mit diesem Programmbaustein kann der Anwender beispielsweise den im Automatisierungssystem vorgesehenen Steckplätzen spezielle Baugruppen zuweisen, diesen Baugruppen Adressen vergeben und ggf. die Baugruppen parametrisieren. Weiterhin sind üblicherweise weitere Programmbausteine für sämtliche, prinzipiell für das Automatisierungssystem geeignete, Baugruppen abgelegt.

Diese weiteren Programmbausteine betreffen insbesondere Regeln, die auf das Zusammenwirken der einzelnen Baugruppen anzuwenden sind. Diese Regeln sind beispielsweise Aufbauregeln, die nur eine bestimmte Kombination von Baugruppen erlauben, oder Konfigurationsregeln, die bei der Verwendung einer bestimmten Baugruppenkombination nur eine bestimmte Einstellung, beispielsweise im Hinblick auf die Parametrisierung, erlauben. Diese Programmbausteine werden beim Starten des Automatisierungssystems geladen.

Sofern eine neue oder eine geänderte Baugruppe in das Automatisierungssystem implementiert werden soll, die dem ausführbaren Programm unbekannt ist, sind in der Regel Programmänderungen am ausführbaren Programm selbst erforderlich. Beispielsweise müssen die die neue Baugruppe betreffenden Aufbauregeln bekannt gemacht werden. Da das ausführbare Programm als Firmware, also als Maschinencode-Programm, ausgeführt ist, erfordert dies einen hohen Aufwand.

Der Erfindung liegt die Aufgabe zugrunde, einen einfachen und flexiblen Betrieb eines Automatisierungssystems zu ermöglichen.

Die Aufgabe wird gemäß der Erfindung gelöst durch ein Verfahren zum Betreiben eines Automatisierungssystems, das eine Anzahl von hardwaretechnischen Baugruppen sowie ein softwaretechnisches Betriebsprogramm aufweist, von dem ein Teil als ausführbares Maschinencode-Programm und ein Teil als Skript-Programm ausgeführt ist, wobei das Zusammenwirken der einzelnen Baugruppen im Automatisierungssystem Regeln unterworfen ist, die zumindest teilweise und vorzugsweise größtenteils oder vollständig im Rahmen des Skript-Programms außerhalb des ausführbaren Programms hinterlegt werden.

Derartige Skript-Programme oder auch das so genannte "Skripting" sind prinzipiell bekannt und werden beispielsweise für die Programmierung im Zusammenhang mit Internet-Anwendungen herangezogen. Bei einem Skript-Programm wird in der Regel derart vorgegangen, dass bestimmte auszuführende Aufgaben in so genannten Skript-Dateien ausgelagert sind, und dass diese Aufgaben mit Hilfe eines Skript-Interpreters erledigt werden. Die Skript-Datei ist in der Regel eine ASCII-Datei, also eine Datei mit beschreibendem Inhalt. Dieser Inhalt wird erst durch den Skript-Interpreter ausgewertet. Um das Skript-Programm zu ändern, ist daher lediglich eine Änderung an der Skript-Datei vorzunehmen. Da die Skript-Datei eine ASCII-Datei und kein Maschinencode-Programm ist, sind Änderungen vergleichsweise einfach vorzunehmen.

Im Vergleich zu einem herkömmlichen Automatisierungssystem werden also bestimmte Aufgaben des Betriebsprogramms aus dem ausführbaren Programm (der Firmware) in das Skript-Programm ausgelagert. Diese Auslagerung betrifft derartige Programmbausteine, die das Zusammenwirken der einzelnen hardwaretechnischen Baugruppen regeln. Dadurch wird der entscheidende Vorteil erzielt, dass auf Änderungen, Ergänzungen oder Modifikationen am Automatisierungssystems sehr flexibel reagiert werden kann, indem diese Veränderungen durch eine einfache Anpassung einer oder mehrerer Skript-Dateien in das Automatisierungssystem implementiert werden.

Durch die Auslagerung von bestimmten Programmbausteinen braucht das ausführbare Programm nicht für alle prinzipiell vom Automatisierungssystem unterstützten Baugruppen die entsprechenden Regeln aufweisen. Bei der Erstkonfiguration genügt es daher, nur die für den konkreten Aufbau tatsächlich notwendigen Regeln im Rahmen der Skript-Datei zu implementieren. Es sind also nur die Regeln für die Baugruppen im konkret verwirklichten Automatisierungssystem aufgenommen. Dadurch ist das Betriebsprogramm und insbesondere das ausführbare Programm kompakt gehalten. Aufgrund der unflexiblen und aufwendigen Handhabung des ausführbaren Programms wurden bisher die Regeln für alle bekannten Baugruppen, die vom Automatisierungssystem an sich unterstützt werden, abgelegt.

Dieses Verfahren zum Betreiben eines Automatisierungssystems ist daher besonders flexibel und ermöglicht ein einfaches Erstellen eines neu aufzubauenden oder ein einfaches Ändern eines bereits bestehenden Automatisierungssystems. Mit Hilfe des Verfahrens werden daher insbesondere die notwendigen Konfigurationsschritte vereinfacht, die üblicherweise im Rahmen eines Engineering- oder Konfigurationssystems vorgenommen werden.

Zweckdienlicherweise werden im Skript-Programm Aufbau- oder Topologieregeln zur Ermittlung des Gesamtaufbaus des Automatisierungssystems hinterlegt.

Dieser Ausgestaltung liegt die Überlegung zugrunde, dass vom Automatisierungssystem üblicherweise prinzipiell unterschiedliche Typen von Baugruppen und insbesondere unterschiedliche Typen von Zentralbaugruppen unterstützt werden. Durch die Auswahl einer bestimmten Zentralbaugruppe wird in der Regel der Rahmen für den möglichen Gesamtaufbau des Automatisierungssystems abgesteckt. Aufgrund des modularen Aufbaus des Automatisierungssystems mit einer Vielzahl von unterschiedlichen Zentralbaugruppen und weiteren Baugruppen lassen sich eine Vielzahl von unterschiedlichen Ausführungen des konkreten Gesamtaufbaus verwirklichen. Aufgrund der Vielfalt der damit verbundenen notwendigen Aufbauregeln ist es besonders zweckdienlich, diese in das Skript-Programm auszulagern, und nur die tatsächlich benötigten Regeln dort abzulegen.

Über die Aufbauregeln lässt sich einerseits der aktuelle Gesamtaufbau des Automatisierungssystems ermitteln. Gleichzeitig besteht die Möglichkeit - beispielsweise durch eine Plausibilitätskontrolle - den ordnungsgemäßen Aufbau des konkreten Automatisierungssystems zu kontrollieren. Als drittes lässt sich bei Kenntnis des Gesamtaufbaus sofort ableiten, an welchem Ort des konkreten Automatisierungssystems welche Erweiterungen möglich sind.

Vorzugsweise wird jeder Baugruppe des Automatisierungssystems eine Aufbauklasse zugeordnet. Dadurch werden also die einzelnen vom Automatisierungssystem prinzipiell unterstützten Baugruppen klassifiziert und in Gruppen geordnet, so dass nicht für jede einzelne spezielle Baugruppe eine eigene Aufbauregel erforderlich ist.

Dadurch wird die Gesamtmenge der notwendigen Aufbauregeln vergleichsweise gering gehalten.

Gemäß einer bevorzugten Ausführung ist vorgesehen, dass jeder Baugruppe des Automatisierungssystems ein Attribut zugeordnet wird, welches Informationen über die Aufbauklasse der jeweiligen Baugruppe enthält. Diese Information ist üblicherweise codiert. Das Attribut gibt also einen eindeutigen Hinweis auf die jeweilige Aufbauklasse. Durch das Zusammenwirken von Attribut und Aufbauklasse besteht in vorteilhafter Weise die Möglichkeit, die der Baugruppe zugeordneten Aufbauregeln in einem separaten Bereich in der Skript-Datei abzulegen und mit Hilfe des Attributs diesen speziellen Bereich abzurufen. Das Attribut dient also quasi zur Navigation zu den der Baugruppe zugeordneten Aufbauregeln. Die Verwendung eines Attributs im Zusammenhang mit der Klassifizierung in Aufbauklassen ermöglicht einen besonders kompakten Aufbau, da verschiedene Baugruppen gleicher Aufbauklassen über das Attribut auf die nur einmal abgelegten Aufbauregeln zugreifen.

Zweckdienlicherweise werden die Attribute der Baugruppen durch das Skript-Programm ausgewertet, indem die Aufbauklassen der einzelnen Baugruppen entnommen werden, und indem anhand der Aufbauregeln eine aktuelle Gesamtaufbauklasse ermittelt wird. Es sind also nicht nur die einzelnen Baugruppen in bestimmte Aufbauklassen klassifiziert, sondern auch der Gesamtaufbau ist klassifiziert. Da über das Skript-Programm lediglich eine Gesamtaufbauklasse und nicht der tatsächliche Gesamtaufbau ermittelt wird, ist die im Rahmen des Skript-Programms verarbeitende Datenmenge gering gehalten.

Vorteilhafterweise sind hierbei die einzelnen Klassen hierarchisch geordnet. So sind die Aufbauklassen beispielsweise unterteilt in Aufbauklassen 0,1,2..., wobei die Klassen mit den größeren Zifferwerten untergeordnete Klassen darstellen. Die hierarchische Ordnung führt dazu, dass beispielsweise bei einer Kombination der Baugruppe der Klasse 1 mit einer Baugruppe der Klasse 3 die Gesamtaufbauklasse 3 erhalten wird, da die Unterklassen die Klasse des Gesamtaufbaus bestimmen.

Gemäß einer bevorzugten Ausgestaltung wird die durch das Skript-Programm ermittelte Gesamtaufbauklasse dem ausführbaren Programm mitgeteilt. Dieses wertet die Gesamtaufbauklasse dann aus und ermittelt den tatsächlichen Gesamtaufbau. Die komplette Regelbearbeitung im Rahmen des Skript-Programms läuft daher auf einer kodifizierten Ebene ab und ermöglicht dadurch eine sehr kompakte Ausbildung der Skript-Datei. Das Skript-Programm selbst enthält keine Informationen über den tatsächlichen Aufbau. Durch diese Kodifizierung über die Attributvergabe, die Vergabe von Aufbauklassen und Gesamtaufbauklassen, wird die Implementierung von Änderungen in das Skript-Programm besonders einfach.

Neben der Hinterlegung von Aufbauregeln werden zusätzlich oder alternativ in einer bevorzugten Ausbildung im Skript-Programm Konfigurationsregeln abgelegt. Die Konfigurationsregeln sind für die Anpassung des Automatisierungssystems an die zu lösende Aufgabe, beispielsweise die Steuerung eines Anlagenprozesses, wesentlich.

Da die Konfigurationsregeln - wie die Aufbauregeln - von der Auswahl der konkreten Baugruppen abhängig sind, besteht auch hier die Möglichkeit, nur die tatsächlich benötigten Konfigurationsregeln in das konkret verwirklichte Automatisierungssystem im Rahmen des Skript-Programms zu implementieren. Sowohl das Skript-Programm als auch das ausführbare Programm werden dadurch kompakt und übersichtlich gehalten. Ähnlich wie bei den Aufbauregeln ist auch hier eine einfache Änderung der Konfigurationsregeln möglich. Das hier vorgestellte Verfahren ist daher einerseits geeignet für die Ermittlung des Aufbaus (Gesamtaufbau) der Hardware-Konfiguration. Andererseits ist es besonders gut geeignet für die leichte Erweiterbarkeit insbesondere von Konfigurationsdaten. Als Konfigurationsdaten werden hierbei sowohl die Konfigurationsregeln als auch beispielsweise Daten bezüglich der Parametrisierung der Baugruppen verstanden.

Vorteilhafterweise umfassen die Konfigurationsregeln alternativ oder in Kombination Parameterregeln, Steckplatzregeln, Konsistenzregeln oder Adressregeln. Parameterregeln geben dabei an, welche Werte bestimmte Parameter einer Baugruppe annehmen dürfen, und welche Auswirkungen die Änderung einzelner Werte auf andere Parameter, eventuell auch auf Parameter anderer Baugruppen, haben. Steckplatzregeln bestimmen, an welcher Position in einem Rack, also an welche Steckplätze, welche Baugruppen gesteckt werden können. So ist beispielsweise üblicherweise vorgesehen, dass eine Spannungsversorgungsbaugruppe nur auf einen bestimmten Steckplatz positionierbar ist. Konsistenzregeln überprüfen, ob das Automatisierungssystem korrekt aufgebaut ist. Sie überprüfen also, ob logische Widersprüche bei der Verwendung einer bestimmten Baugruppenkombination bestehen. Adressregeln sind für eine korrekte Adressvergabe für die einzelnen Baugruppen zuständig.

Zur Ausführung des Skript-Programms ist bevorzugt der bereits erwähnte Skript-Interpreter vorgesehen, der auf die Skript-Datei zugreift. Der Skript-Interpreter wird auch als "Skript-Engine" bezeichnet. Gemäß einer bevorzugten Ausgestaltung wird der Skript-Interpreter aus dem ausführbaren Programm heraus gestartet. Das ausführbare Programm enthält also einen Verweis oder einen Zeiger auf den Skript-Interpreter, so dass das Skript-Programm ablaufen kann. Das Skript-Programm ist also ein Hilfsprogramm, das nur bei Bedarf aus dem ausführbaren Programm heraus gestartet wird.

Zweckdienlicherweise sind den Baugruppen zugeordnete Informationen in einer Informationsdatei abgelegt, auf die das Skript-Programm zugreift. Diese Informationsdatei liefert also ein spezifisches, baugruppenbezogenes Wissen.

Das Abspeichern eines derartigen Wissens, welches auch als Metawissen bezeichnet wird, in einer Informations- oder Metadatei ermöglicht in einfacher Weise die notwendigen Informationen in das konkrete Automatisierungssystem einzubringen. Diese Informationen beinhalten beispielsweise die einer Aufbauklasse zugeordnete konkrete Ausführung des Aufbaus oder enthalten bestimmte Parameterwerte, die einer speziellen Baugruppe zugeordnet sind. Die Auslagerung dieses Wissens in eine Informationsdatei oder in mehreren Informationsdateien ermöglichen vorteilhafterweise, dass lediglich das tatsächlich benötigte Wissen abgelegt wird. Unnötiger Ballast ist nicht notwendig. Zudem kann die Informationsdatei bei einer Änderung des Automatisierungssystems leicht geändert oder ergänzt werden.

In der Kombination des Skript-Programms mit einer solchen Informationsdatei liegt ein wesentlicher Vorteil im Hinblick auf eine möglichst einfache und flexibel Handhabung des Automatisierungssystems. Denn einerseits werden über das Skript-Programm die Regeln aus dem ausführbaren Programm ausgelagert und können somit einfach geändert werden. Im Zusammenspiel mit dem Ablegen des Metawissens in der Informationsdatei ermöglicht dies andererseits, dass das ausführbare Programm sich die notwendigen Erkenntnisse bezüglich des Aufbaus und/oder der Konfiguration des Automatisierungssystems in einfacher Weise ermittelt.

Hierzu braucht das ausführbare Programm lediglich zwischen dem Skript-Programm und der Informationsdatei zu navigieren. D.h. aus dem ausführbaren Programm wird zunächst das Skript-Programm gestartet. Sofern dieses beispielsweise zur Ermittlung der Gesamtaufbauklasse Informationen aus dem Metawissen benötigt, ruft das Skript-Programm das Wissen entweder direkt aus der Informationsdatei ab. Oder es stellt - was bevorzugt wird - eine Anfrage an das ausführbare Programm, welches dann aus der Informationsdatei die für das Skript-Programm notwendige Information übermittelt. Sobald das Skript-Programm die Gesamtaufbauklasse ermittelt und dem ausführbaren Programm mitgeteilt hat, so ruft dieses aus der Informationsdatei die zu der Gesamtaufbauklasse zugehörige Information ab. Durch dieses Zusammenwirken zwischen Skript-Programm und Informationsdatei brauchen also selbst bei umfangreichen Änderungen am konkreten Automatisierungssystem keine Eingriffe in das ausführbare Programm vorgenommen werden.

Zweckdienlicherweise werden nämlich Änderungen am konkreten Automatisierungssystem, beispielsweise durch Hinzufügen oder Modifizieren einer Baugruppe, durch eine Änderung der Informationsdatei dem Betriebsprogramm bekannt gemacht.

Bei umfangreichen Änderungen am Automatisierungssystem, die die Regeln beeinflussen, wird zudem zweckdienlicherweise lediglich das Skript-Programm angepasst. Die Anpassung des Skript-Programms erfolgt dabei vorzugsweise durch eine Änderung/Hinzufügungen einer Skript-Datei. In diese sind dabei zweckmäßigerweise neben allgemeinen Regeln für das Automatisierungssystem auch Regeln für eine Baugruppenfamilie oder Regeln für eine einzelne Baugruppe abgelegt. Die verschiedenen Skript-Dateien sind dabei vorzugsweise in einer Skript-Datenbank abgelegt.

Gemäß einer bevorzugten Ausgestaltung sind die einzelnen Regeln bestimmten Regelklassen zugeordnet, wobei im ausführbaren Programm für die jeweiligen Regelklassen ein Programmbaustein "Regelmanager vorgesehen ist, von dem aus die Überprüfung oder Bearbeitung der jeweiligen Regelklasse initiiert wird. Eine solche Regelklasse umfasst beispielsweise die Aufbauregeln, die Parameterregeln, die Steckplatzregeln usw.

Vorzugsweise veranlasst der Regelmanager, dass die den zu überprüfenden Regeln zugeordneten Skript- und Informationsdateien eingelesen werden. Über den Regelmanager steuert das ausführbare Programm daher in vorteilhafter Weise das Zusammenwirken zwischen Skript-Programm und Informationsdatei.

Gemäß einer bevorzugten Weiterbildung stellt der Regelmanager aus den eingelesenen Skript- und Informationsdaten eine Arbeitsanweisung in Form einer Zeichenfolge oder eines so genannten Skript-Strings zusammen. Anhand dieser Arbeitsanweisung führt dann der Skript-Interpreter das Skript-Programm aus. Es ist also vorgesehen, dass der Skript-Manager eine spezifische Arbeitsanweisung, beispielsweise in Form einer speziellen Skript-Datei, zusammenstellt. Dadurch besteht die Möglichkeit, für eine spezielle Aufgabenstellung beispielsweise auf mehrere Skript-Dateien zuzugreifen und diese in geeigneter Weise miteinander zu kombinieren. Dadurch können in den Skript-Dateien bestimmte Grundfunktionen verwirklicht sein, die dann durch geeignete Kombination miteinander die Ausführung der konkreten Aufgabe ermöglichen. Die zusammengestellte Arbeitsanweisung führt also zweckdienlicherweise in eine spezielle Skript-Datei. Um Rechnerzeit einzusparen, wird diese spezielle Skript-Datei zweckdienlicherweise in einen Zwischenspeicher (cache) abgelegt.

Bevorzugt werden in einer weiteren Informationsdatei die für die Überprüfung oder Bearbeitung einer Regelklasse notwendigen Informationen für den Regelmanager abgelegt. Diese weitere Informationsdatei enthält insbesondere einen Hinweis auf die der Regelklasse zugeordneten Skript- und Informationsdateien, auf den zugeordneten Skript-Interpreter usw.

Ausführungsbeispiele der Erfindung werden im Folgenden anhand der Zeichnung näher erläutert. Es zeigen jeweils in schematischen und stark vereinfachten Darstellungen:
- FIG 1: eine Blockbild-Darstellung einer programmtechnischen Verwirklichung eines herkömmlichen Automatisierungssystems,
- FIG 2: die programmtechnische Verwirklichung eines Automatisierungssystems gemäß der Erfindung,
- FIG 3: eine schematische Darstellung zur Illustration der Ermittlung des Gesamtaufbaus eines Automatisierungssystems.

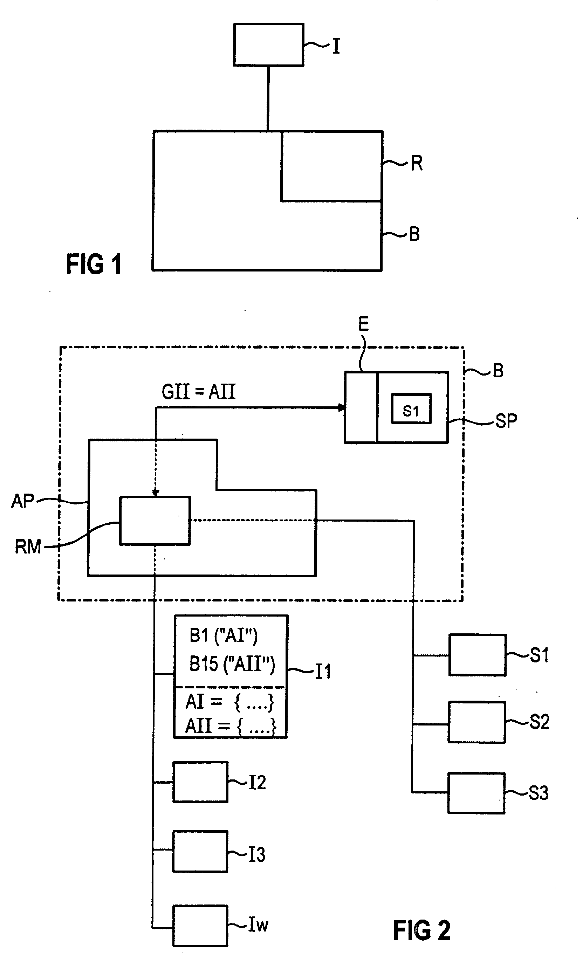

Bei einem herkömmlichen Automatisierungssystem ist gemäß FIG 1 vorgesehen, dass ein Betriebsprogramm B, das die softwaretechnische Umsetzung des Automatisierungssystem darstellt, als Firmware ausgebildet ist, also als ein ausführbares Programm, das in einem Maschinencode umgesetzt ist.

Das Betriebsprogramm B dient zur Umsetzung einer bestimmten Steuerungs- oder Regelungsaufgabe, für die das Automatisierungssystem eingesetzt wird. Zur Lösung dieser Aufgabe umfasst das Automatisierungssystem neben dem Betriebsprogramm B Baugruppen als hardwaretechnische Komponenten, über die einzelne Anlagenkomponenten eines zu steuernden Anlagenprozesses angesteuert werden. Das Betriebsprogramm B regelt dabei das Zusammenwirken der einzelnen Baugruppen untereinander.

Das Automatisierungssystem ist in der Regel modular aufgebaut, so dass es für eine Vielzahl von Einsatzzwecken und für eine Vielzahl von unterschiedlichen Aufgaben konfiguriert werden kann. Diese Konfiguration geschieht einerseits durch die Auswahl von geeigneten Baugruppen aus einer Vielzahl von Baugruppen, die vom Automatisierungssystem prinzipiell unterstützt werden. Für die Konfiguration des Automatisierungssystems ist weiterhin die software- oder programmtechnische Anpassung an die zu lösende Aufgabe von besonderer Bedeutung. Erst die Möglichkeit der programmtechnischen Anpassung macht das modular aufgebaute Automatisierungssystem für eine Vielzahl von Aufgaben einsetzbar. Die programmtechnische Anpassung an die jeweilige Aufgabe ist daher bei der konkreten Ausgestaltung des für einen bestimmten Anlagenprozess zu konfigurierenden Automatisierungssystems eine wesentliche Hauptaufgabe. Für die Konfiguration ist üblicherweise ein Teilsystem des Automatisierungssystems zuständig, das so genannte Engineering- oder Konfiqurationssystem. Die folgenden Ausführungen beziehen sich daher im Wesentlichen auf dieses Teilsystem.

Da bei einem herkömmlichen Automatisierungssystem das Betriebsprogramm B, insbesondere das Betriebsprogramm B eines Engineering-Systems, im Wesentlichen vollständig als Firmware ausgebildet ist, sind Änderungen am Betriebsprogramm B selbst nur mit großem Aufwand zu verwirklichen. Daher sind im Betriebsprogramm B für alle vom Automatisierungssystem prinzipiell unterstützten Baugruppen entsprechende Programmbausteine implementiert. Insbesondere ist ein Regelbaustein R implementiert, der die für das Zusammenwirken der einzelnen Baugruppen untereinander gültigen Regeln aufweist. Informationen über den tatsächlichen Aufbau des Automatisierungssystems, also im Hinblick auf die tatsächlich gesteckten Baugruppen, sind in der Regel in einer Informationsdatei I abgelegt. Das Betriebsprogramm entnimmt aus der Informationsdatei I die Informationen über die implementierten Baugruppen und wendet die entsprechenden Regeln mit Hilfe des Regelbausteins R an.

Diese Ausgestaltung hat zum einen den Nachteil, dass bei Änderungen oder Erweiterungen am Automatisierungssystem, die im ursprünglichen Betriebsprogramm B nicht berücksichtigt sind, umfangreiche und aufwendige Änderungen am Betriebsprogramm selbst vorgenommen werden müssen. Zum anderen ist es notwendig, dass im Betriebsprogramm B die Regeln für alle zulässigen Kombinationen von Baugruppen abgelegt sein müssen. Dies führt zu einer Aufblähung des gesamten Betriebsprogramms B mit einer Vielzahl von Programmbausteinen, die für eine spezielle, konkrete Verwirklichung des Automatisierungssystems nicht notwendig sind.

Die prinzipielle Idee gemäß der Erfindung ist gemäß FIG 2 darin zu sehen, dass die die Regeln betreffenden Programmbausteine zumindest teilweise im Rahmen eines Skript-Programms SP abgelegt und abgearbeitet werden. Die die Regeln betreffenden Programmbausteine werden also quasi aus der Firmware ausgelagert. Die Firmware wird im Folgenden als ausführbares Programm AP bezeichnet. Der entscheidende Vorteil dieser Auslagerung ist darin zu sehen, dass aufgrund der Natur des durch das Skript-Programm SP verwirklichten Skriptings eine Änderung an den Regeln vergleichsweise einfach vorgenommen werden kann. Zum anderen wird dadurch die Möglichkeit geschaffen, in einem konkreten Automatisierungssystem nur solche Regeln programmtechnisch abzulegen, die auch tatsächlich benötigt werden. Dadurch wird das gesamte Betriebsprogramm B, umfassend das ausführbare Programm AP und das Skript-Programm SP, besonders kompakt.

Die in das Skript-Programm SP ausgelagerten Regeln umfassen dabei insbesondere sowohl Aufbauregeln als auch Konfigurationsregeln. Die Aufbauregeln dienen zur Ermittlung des Gesamtaufbaus eines konkreten Automatisierungssystems in Abhängigkeit von den verwendeten Baugruppen. Die Konfigurationsregeln sind für die Konfiguration des Automatisierungssystems, also für seine Anpassung an die zu lösende Aufgabe, beispielsweise die Steuerung eines bestimmten Anlagenprozesses, zuständig.

Die softwaretechnische Umsetzung des Automatisierungssystem umfasst gemäß FIG 2 neben dem Betriebsprogramm B weiterhin eine Anzahl von Dateien. Dies betrifft einerseits Skript-Dateien S1 bis S3 sowie Informationsdateien I1 bis I3 und eine weitere Informationsdatei Iw. Die Skript-Dateien S1 bis S3 beinhalten beispielsweise Aufbauregeln (S1), Adressregeln (z.B. S2), Parameterregeln (z.B. S3) usw. In den Informationsdateien I1 bis I3 sind für die Abarbeitung der Regeln notwendige Informationen enthalten. Beispielsweise sind hier Informationen über die Parametrierung der Baugruppen abgelegt.

Das ausführbare Programm AP umfasst einen Programmbaustein "Regelmanager" RM. Bevorzugt ist vorgesehen, dass die einzelnen im Betriebsprogramm B abgelegten Regeln in Regelklassen unterteilt sind und jeder Regelklasse ein Regelmanager RM zugeordnet ist. Eine Regelklasse beinhaltet beispielsweise alle Aufbauregeln oder alle Regeln, die im Rahmen der Konfiguration des Automatisierungssystems eine Adressvergabe an die einzelnen Baugruppen regeln. Der Regelmanager RM initiiert die Bearbeitung oder Prüfung der jeweiligen Regeln. Die Kommunikation zwischen dem Regelmanager RM und dem Skript-Programm SP erfolgt über dafür vorgesehene Schnittstellen, so dass es möglich ist, während der Bearbeitung des Skript-Programms SP auf die Schnittstellen zuzugreifen und beispielsweise Informationen über das ausführbare Programm AP abzurufen. Die Schnittstellen sind vorzugsweise so genannte COM-Schnittstellen.

Zur Bearbeitung/Überprüfung der Regeln wird aus dem ausführbaren Programm AP heraus der Regelmanager RM angerufen. Dieser holt sich nun aus den Informationsdateien I1 bis I3, Iw sowie den Skript-Dateien S1 bis S3 die notwendigen Daten, die für die Überprüfung/Verarbeitung der Regeln notwendig sind.

Wird beispielsweise aus dem ausführbaren Programm AP heraus die Überprüfung oder die Ermittlung des Gesamtaufbaus des Automatisierungssystems angeregt, so entnimmt der Regelmanager RM zunächst aus der weiteren Informationsdatei Iw die Informationen darüber, wo die für diesen Aufgabenkomplex notwendigen Daten abgelegt sind. Die weitere Informationsdatei Iw leitet den Regelmanager also zu den dem Aufgabenkomplex zugeordneten Informationsdateien I1 bis I3 und Skript-Dateien S1 bis S3. Er entnimmt beispielsweise aus der weiteren Informationsdatei Iw, das die den Aufbau betreffenden Informationen in der Informationsdatei I1 und die den Aufbau betreffenden Regeln in der Skript-Datei S1 abgelegt sind. Er liest dann diese beiden Dateien ein und veranlasst, dass ein Skript-Interpreter E, die so genannte Skript-Engine, gestartet wird. Der Skript-Interpreter E ist ein Hilfsprogramm über das die in den Skript-Dateien S1 bis S3 beschriebenen Funktionen abgearbeitet werden. Der Skript-Interpreter E ist ein Teil des Skript-Programms SP. Zur Ausführung des Skript-Programms SP ist weiterhin eine Skript-Datei S1 bis S3 notwendig, die durch den Skript-Interpreter E abgearbeitet wird. Im Ausführungsbeispiel übermittelt der Regelmanager RM die Skriptdatei S1 zur Ausführung an den Skript-Interpreter E. Das Ergebnis bei der Ausführung des Skript-Programms SP wird dem ausführbaren Programm AP übermittelt und dort ggf. unter Rückgriff auf eine weitere Informationsdatei I1 bis I3 ausgewertet.

Alternativ zu der hier beschriebenen Variante, wo lediglich eine Skript-Datei S1 aufgerufen wird, ist vorzugsweise vorgesehen, dass die abzuarbeitenden Aufgaben in unterschiedliche Funktionsgruppen unterteilt sind und dass beispielsweise eine Skript-Datei allgemeine und grundlegende Aufgaben beinhaltet. Diese allgemeine Skript-Datei ist bei jeder Ausführung des Skript-Programms SP hinzuzuziehen. Die allgemeine Skript-Datei wird ergänzt durch spezielle, funktionsspezifische Skriptdateien, beispielsweise eine Skriptdatei S1', die sich mit den Aufbauregeln befasst. Falls noch weitere Skript-Dateien für die Ausführung einer speziellen Funktion notwendig sind, so erhält der Regelmanager diese Information, dass eine weiter Skript-Datei benötigt wird, aus der weiteren Informationsdatei Iw. Aus den unterschiedlichen Skript-Dateien wählt der Regelmanager RM die relevanten Daten aus und erstellt eine neue, kombinierte Skript-Datei, also eine vorgegebene Skript-Zeichenfolge, auch Skript-String genannt.

Diese softwaretechnische Verwirklichung des Automatisierungssystems ermöglicht es, sehr flexibel auf Änderungen am Automatisierungssystem zu reagieren. Dies ergibt sich unmittelbar aus der Auslagerung derjenigen Programmteile in das Skript-Programm SP, die von einer Änderung betroffen sind. Das Skript-Programm SP in Zusammenwirken mit den Informationsdateien I1 bis I3, Iw, die das Wissen über das konkrete Automatisierungssystem bereitstellen, machen baugruppenspezifische Programmteile im ausführbaren Programm AP im Wesentlichen überflüssig. Das ausführbare Programm AP navigiert lediglich mit Hilfe des Regelmanagers RM zwischen den Informationsdateien I1 bis I3, Iw und den Skript-Dateien S1 bis S3 und ermittelt daraus die notwendigen Kenntnisse für den Betrieb des Automatisierungssystems. Sofern sich dieses ändert, ist daher eine Änderung der Informationsdateien I1 bis I3, Iw und - bei wesentlichen, die Regeln betreffenden Änderungen - auch eine Änderung der Skriptdateien S1 bis S3 ausreichend.

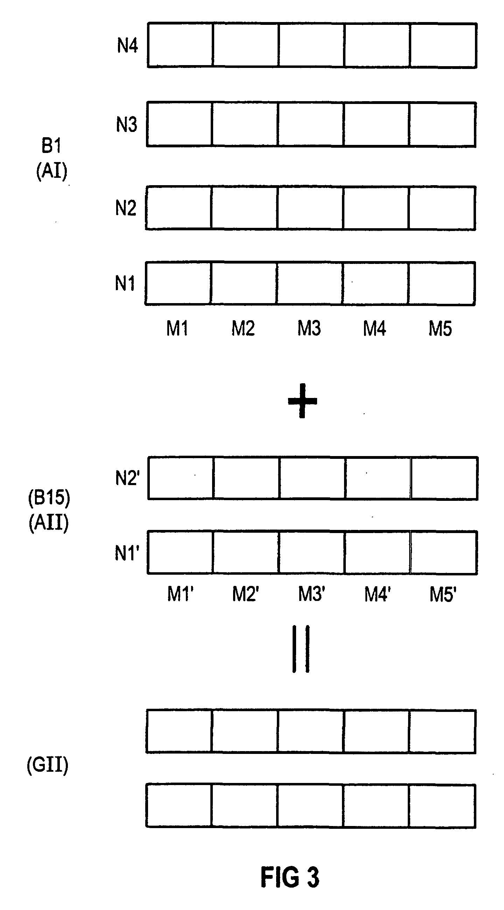

Anhand der Figuren 2 und 3 wird im Folgenden die Ermittlung des Gesamtaufbaus eines konkreten Automatisierungssystems erläutert. Hierzu ist vorgesehen, dass die Baugruppen, beispielsweise eine Baugruppe B1 und eine Baugruppe B15, einer bestimmten Aufbauklasse AI,AII zugeordnet sind. Die Aufbauklasse AI,AII beschreibt den prinzipiell möglichen Maximalaufbau der jeweiligen Baugruppe B1,B15. Die Baugruppe B1,B15 kann dabei eine so genannte Zentralbaugruppe sein, die den Maximalaufbau einer gesamten Station definiert. Die Baugruppe B1,B15 kann aber auch eine spezielle Baugruppe, beispielsweise ein Steuerbaustein für ein Ventil, sein. Weitere Baugruppen sind beispielsweise ein Spannungsversorgungsmodul oder ein Kopplungsmodul, über das zwei Ebenen einer Zentralbaugruppe miteinander verbunden werden.

In der Informationsdatei I1 ist abgelegt, welche Baugruppen B1,B15 konkret im Automatisierungssystem verwirklicht sind, und welche Aufbauklasse AI,AII sie aufweisen. Die Information über die Aufbauklasse AI,AII ist dabei in Form eines Attributs "AI" bzw. "AII" abgelegt. Gleichzeitig ist in der Informationsdatei I1 der den Attributen "AI", "AII" zugeordnete konkrete Aufbau im Rahmen eines Beschreibungsstrings {...} beschrieben.

Hinter den Attributen "AI","AII" verbirgt sich also ein konkreter Aufbau. Beispielsweise umfasst die Baugruppe B1 mit der Aufbauklasse AI vier Ebenen N1 bis N4 mit jeweils fünf Steckplätzen M1 bis M5. In jedem der Steckplätze M1 bis M5 kann eine Baugruppe eingesteckt werden. Die Baugruppe B1 ist beispielsweise eine Zentralbaugruppe. Die Baugruppe B15 ist der Aufbauklasse AII zugeordnet und umfasst dabei gemäß FIG 3 lediglich zwei Ebenen N1',N2' zu je fünf Steckplätzen M1' bis M5'. Die Baugruppe B15 ist beispielsweise ein Kopplungsmodul, welches die Ebenen N1 und N2 der Baugruppe B1 über deren Steckplätze M2 verbindet. Sobald ein derartiges Kopplungsmodul gesteckt ist, werden nur noch zwei Ebenen, nämlich die Ebene N1,N2 der Zentralbaugruppe B1 unterstützt. Dadurch wird der Gesamtaufbau beschränkt und es wird eine Gesamtaufbauklasse GII erhalten, die der Aufbauklasse AII entspricht.

Diese Gesamtaufbauklasse GII wird über das Skript-Programm SP ermittelt und dem ausführbaren Programm AP mitgeteilt, vorzugsweise mit der Zusatzinformation, dass die Gesamtaufbauklasse GII der Aufbauklasse AII entspricht. Mit dieser Information wendet sich der Regelmanager RM nun an die Informationsdatei I1 und entnimmt aus ihr den konkreten der Aufbauklasse AII zugeordneten Gesamtaufbau aus dem dort abgelegten Beschreibungsstring {...}.

## Patentansprüche

1. Verfahren zum Betreiben eines Automatisierungssystems, das eine Anzahl von Baugruppen (B1,B15) sowie ein Betriebsprogramm (B) für den Betrieb der Baugruppen (B1,B15) aufweist, von dem ein Teil als ausführbares Maschinencode-Programm (AP) und ein Teil als Skript-Programm (SP) ausgeführt ist, wobei das Zusammenwirken der einzelnen Baugruppen (B1,B15) im Automatisierungssystem Regeln unterworfen ist, die zumindest teilweise im Rahmen des Skript-Programms (SP) außerhalb des ausführbaren Programms (AP) hinterlegt werden.

2. Verfahren nach Anspruch 1, bei dem im Skript-Programm (SP) Aufbauregeln zur Ermittlung des Gesamtaufbaus des Automatisierungssystems hinterlegt werden.

3. Verfahren nach Anspruch 2, bei dem jeder Baugruppe (B1,B15) des Automatisierungssystems eine Aufbauklasse (AI,AII) zugeordnet wird.

4. Verfahren nach Anspruch 3, bei dem jeder Baugruppe (B1,B15) des Automatisierungssystems ein Attribut ("A1", AII") zugeordnet wird, welches Informationen über die Aufbauklasse (AI,AII) der Baugruppe (B1,B15) enthält.

5. Verfahren nach Anspruch 4, bei dem die Attribute ("AI","AII") der Baugruppen (B1,B15) durch das Skript-Programm (SP) ausgewertet werden, indem die Aufbauklassen (AI,AII) der einzelnen Baugruppen (B1,B15) den Attributen ("AI", "AII") entnommen werden und anhand der Aufbauregeln eine aktuelle Gesamtaufbauklasse (GII) ermittelt wird.

6. Verfahren nach Anspruch 5, bei dem die durch das Skript-Programm (SP) ermittelte Gesamtaufbauklasse (GII) dem ausführbaren Programm (SP) mitgeteilt wird.

7. Verfahren nach einem der vorhergehenden Ansprüche, bei dem im Skript-Programm (SP) Konfigurationsregeln für die Konfiguration des Automatisierungssystems hinterlegt sind.

8. Verfahren nach Anspruch 7, bei dem die Konfigurationsregeln Parameterregeln, Steckplatzregeln, Konsistenzregeln oder Adressregeln umfassen.

9. Verfahren nach einem der vorhergehenden Ansprüche, bei dem zur Durchführung des Skript-Programms (SP) ein Skript-Interpreter (E) auf eine Skript-Datei (S1) zugreift.

10. Verfahren nach Anspruch 9, bei dem der Skript-Interpreter (E) aus dem ausführbaren Programm (AP) aufgerufen wird.

11. Verfahren nach einem der vorhergehenden Ansprüche, bei dem den Baugruppen (B1,B15) zugeordnete Informationen in einer Informationsdatei (I1 bis I3) abgelegt werden, auf die das Skript-Programm (SP) zugreift.

12. Verfahren nach Anspruch 11, bei dem Änderungen am Automatisierungssystem durch eine Änderung der Informationsdatei (I1 bis I3) dem Betriebsprogramm (B) bekanntgemacht wird.

13. Verfahren nach einem der vorhergehenden Ansprüche, bei dem bei Änderungen am Automatisierungssystem, die die Regeln beeinflussen, das Skript-Programm (SP) angepasst wird.

14. Verfahren nach Anspruch 13, bei dem die Anpassung des Skript-Programms (SP) durch eine Änderung/Hinzufügung einer Skript-Datei (S1) erfolgt.

15. Verfahren nach Anspruch 14, bei dem in einer Skript-Datei allgemeine Regeln, Regeln für eine Baugruppenfamilie oder Regeln für eine einzelne Baugruppe abgelegt werden.

16. Verfahren nach einem der vorhergehenden Ansprüche, bei dem die einzelnen Regeln Regelklassen zugeordnet sind, und bei dem für die jeweiligen Regelklassen jeweils ein Programmbaustein "Regelmanager" (RM) im ausführbaren Programm (AP) vorgesehen ist, von dem die Überprüfung oder Bearbeitung der jeweiligen Regelklasse initiiert wird.

17. Verfahren nach Anspruch 16, bei dem der Regelmanager (RM) veranlasst, dass die den zu überprüfenden Regeln zugeordneten Skript-Dateien (S1) und Informationsdateien (I1) eingelesen werden.

18. Verfahren nach Anspruch 17, bei dem der Regelmanager (RM) aus den eingelesenen Skript- und Informationsdaten eine Arbeitsanweisung zusammenstellt, anhand derer der Skript-Interpreter (E) das Skript-Programm (SP) ausführt.

19. Verfahren nach einem der Ansprüche 16 bis 18, bei dem in einer weiteren Informationsdatei (Iw) die für die Überprüfung oder Bearbeitung einer Regelklasse notwendigen Informationen für den Regelmanager (RM) abgelegt werden.
